# EUROPÄISCHE PATENTSCHRIFT

(11) **EP 2 322 833 B1**
(45) Veröffentlichungstag und Bekanntmachung des Hinweises auf die Patenterteilung: **17.07.2013**
(21) Anmeldenummer: 10014096.1
(22) Anmeldetag: 29.10.2010
(51) Int. Cl.: F16L 33/035, F16L 33/08, F16L 21/00

(54) **Spannvorrichtung zum Überbrücken von zwei aneinander annäherbaren Elementen**
Tensioning device for bridging two neighbouring elements
Dispositif de serrage destiné au pontage de deux éléments pouvant être reliés l'un à l'autre

(30) Priorität: 05.11.2009 DE 202009014968 U
(43) Veröffentlichungstag der Anmeldung: 18.05.2011
(73) Patentinhaber: Felber, Winfried, 86653 Monheim (DE)
(72) Erfinder: Felber, Winfried, 86653 Monheim (DE)
(74) Vertreter: Munk, Ludwig

(56) Entgegenhaltungen:
- EP-A1- 2 072 877
- EP-A2- 0 133 660
- WO-A1-2006/111181
- US-A- 3 747 172
- US-A- 3 769 665
- US-A- 4 237 584
- US-A- 4 802 261

## Beschreibung

Die Erfindung betrifft eine Spannvorrichtung zum Überbrücken von zwei aneinander annäherbaren Elementen mit wenigstens einem mit einem Element verbundenen Spanngurt, der in ein zugeordnetes, mit dem anderen Element verbundenes Spannschloss eingreift und hiermit bewegbar ist.

Spannvorrichtungen dieser Art sind allgemein bekannt. Derartige Spannvorrichtungen, auch als Spannschellen oder ähnlich bezeichnet, werden meist auf Schläuchen oder Rohren aufgenommen, um diese an einem anderen Gegenstand zu befestigen. Weiterhin werden derartige Spannvorrichtungen für Verbindungselemente eingesetzt, mit denen beispielsweise zwei Rohre miteinander verbunden werden sollen. Die Spannvorrichtung weist meist ein Spannband mit einem darauf befestigten Spanngurt und einem Spannschloss auf, in das der Spanngurt eingesteckt wird. Mittels einer Spannschraube am Spannschloss, die über ihr Schneckengewinde in direktem Kontakt mit einer Verzahnung des Spanngurts steht, wird die Spannvorrichtung an ihren Enden gespannt. Die Befestigung des Spanngurtes und des Spannschlosses auf dem jeweils zugeordneten Spannbandende erfolgt bisher über Schweißen, Nieten oder Clinchen.

Durch das Verschweißen und Nieten besteht jedoch eine hohe Korrosionsgefahr, d.h. die Verbindungsstelle kann rosten, wodurch der Halt der Verbindungen Spanngurt-Spannband und Spannschloss-Spannband wesentlich herabgesetzt wird. Beim Toxen besteht das Problem, dass der zur Erzeugung der Verbindung zweier Elemente vorgesehene, in die Matrize einfahrende Stempel einem Verschleiß unterliegt, so dass die erzielbare Sicherheit mit zunehmender Stückzahl der Verbindungen abnimmt. Außerdem sind die dafür notwendigen Werkzeuge (Stempel, Matrize usw.) aufwendig in ihrer Herstellung und teuer.

Das Dokument US 3,747,172 zeigt eine Schlauchschelle, in welcher ein Bandabschnitt in Segmente unterteilt ist, welche miteinander gekoppelt werden können, um das vollständige Band zu bilden. Die Segmente haben zusammenwirkende Elemente, welche als Haken oder als Ausnehmungen ausgebildet sind. Die Einstellung eines Drucks, mit welchem die Schlauchstelle ein Element wie beispielsweise einen Schlauch umschließt, kann mit Hilfe eines Spanngurts und eines zugehörigen Spannschlosses eingestellt werden.

Das Dokument EP 0 133 660 zeigt eine Vorrichtung zum Reparieren oder Schützen eines Auspufftopfes oder einer Leitung eines motorgetriebenen Fahrzeugs. Die Vorrichtung weist ein Band auf, welches ringförmig gebogen werden kann. Um das ringförmig gebogene Band um ein anderes ringförmiges Band herumzuspannen sind ein Spanngurt und ein zugeordnetes Spannschloss vorgesehen, wobei sowohl der Spanngurt wie auch das Spannschloss in geeignet ausgeformte Bereiche des ringförmigen Elements eingehängt werden können. Hiervon ausgehend ist es daher die Aufgabe der vorliegenden Erfindung, eine Spannvorrichtung zu schaffen, mit der die obigen Nachteile vermieden werden, die einfach montierbar ist und eine hohe Sicherheit gewährleistet.

Erfindungsgemäß wird diese Aufgabe dadurch gelöst, dass der Spanngurt und das Spannschloss jeweils durch eine formschlüssige Steckverbindung am zugeordneten Element angebracht ist, dass die aneinander annäherbaren Elemente mit angeformten, als aus ihrer Ebene heraustretende Vorsprünge ausgebildeten Halteorganen versehen sind und dass der vom Spannschloss abgewandte Endbereich des Spanngurts und ein hierzu gegenläufiger, als am Spannschloss angreifender Gurtansatz ausgebildeter Schlossgurt mit an den elementseitigen Halteorganen eingehängten Gegenhalteorganen versehen sind.

Erfindungsgemäß ist vorgesehen, dass die vom Spannschloss abgewandten Enden des Spanngurts und des Schlossgurts mit jeweils einer Fixierzunge versehen sind, der jeweils eine Fanghutze des zugeordneten Elements zugeordnet ist, die eine dem jeweils gegenüberliegenden Element zugewandte Öffnung aufweist. Die Fixierzunge verhindert dabei ein Abheben des Spanngurts bzw. des Schlossgurts von dem zugeordneten Element, so dass ein Abstehen des Endbereiches des Spanngurts bzw. des Schlossgurts vorteilhaft vermieden wird.

Ferner ist erfindungsgemäß vorgesehen, dass die Länge der Fixierzunge größer als die Länge der im Bereich der Gegenhalteorgane vorgesehenen Zungen ist, wobei der Längenüberschuss höchstens der lichten Innenlänge der als Halteorgane fungierenden Hutzen entspricht und wobei die Fixierzunge bei in die als Halteorgane fungierenden Hutzen eingefahrenen, den Gegenhalteorganen zugeordneten Zungen in die jeweils zugeordnete Fanghutze einschnappt. Dadurch dass die Fixierzunge in der Endstellung in die zugeordnete Hutze einschnappt, befindet sich die Fixierzunge höhengleich zu den vorderen Gurtbereichen, was einer satten Anlage an dem Element förderlich ist.

Der Spanngurt und das Spannschloss werden durch die Verbindung von Gegenhalteorganen mit Halteorganen der Elemente an diesen befestigt, so dass eine lösbare formschlüssige Steckverbindung erzielt wird. Diese Steckverbindung ermöglicht eine einfache Handhabung und gewährleistet eine sichere Verbindung der jeweiligen Teile miteinander. Die Gefahr des Rostens der Verbindungsstelle kann durch Verhinderung von Materialveränderungen der zu verbindenden Teile vermieden werden, wodurch die Haltbarkeit und die Qualität der Verbindungen über mehrere Jahre hinweg gleichbleibend aufrechterhalten werden kann. Zudem kann die Verbindung von Spanngurt bzw. Spannschloss mit dem zugeordneten Element schnell und leicht vorgenommen werden, so dass jede Person dies durchführen kann. Daher ist es nicht mehr notwendig, dass derartige Teile vor Installation bereits vormontiert werden müssen. Außerdem ist zum Montieren des Spanngurtes und des Spannschlosses an dem jeweils zugeordneten Element kein Werkzeug oder entsprechende spezielle Einrichtungen notwendig, denn der Endbereich des Spanngurtes wie auch ein am Spannschloss angreifender Schlossgurt werden mittels ihrer Gegenhalteorgane an den Halteorganen der Elemente einfach eingehängt und sind somit am Element gesichert befestigt.

Die erfindungsgemäße Spannvorrichtung ist für verschiedene Anwendungsfälle geeignet. Beispielsweise kann sie neben dem Befestigen von Schläuchen an einem Anschlussstück in jeglichen Bereichen, auch für Rohrverbindungselemente im Tiefbau oder in der Automobilindustrie eingesetzt werden. Die formschlüssige Steckverbindung ermöglicht somit eine einfache Handhabung und hohe Sicherheit. Außerdem ist eine einfache Herstellung durch Stanz- und Tiefziehvorgänge möglich.

Vorteilhaft kann dabei sein, wenn die Halteorgane an die aneinander annäherbaren Elemente und die Gegenhalteorgane an den Spanngurt und an den Schlossgurt angeformt sind. Dadurch können mit einfachen Mitteln Halte- und Gegenhalteorgane geschaffen werden.

Besonders zweckmäßig kann sein, wenn die Halteorgane als angeformte Hutzen ausgebildet sind. Auf diese Weise können die Gegenhalteorgane sicher an den Hutzen eingehängt und gehalten werden.

Um das Abheben der Gegenhalteorgane des Spanngurtes bzw. des Schlossgurtes von den Halteorganen der Elemente noch gezielter zu verhindern, kann vorgesehen werden, dass die Gegenhalteorgane durch quer zur Spannrichtung verlaufende Anschlagkanten gebildet werden, die jeweils eine in die zugeordnete Hutze einführbare Zunge flankieren. Die Hutzen und die in diese jeweils eingreifenden Zungen ergeben eine gegenseitige Verhakung, so dass der Spanngurt und der Schlossgurt sicher an einem vorteilhaft als Element vorgesehenen Spannband der Spannvorrichtung anliegen und jeweils eine noch sicherere formschlüssige Steckverbindung gewährleistet wird. Die Krafteinleitung kann dabei auf mehrere Stellen des Spanngurtes bzw. des Schlossgurtes verteilt werden, nämlich auf die die Zunge flankierenden Anschlagflächen sowie auf das Zungenende.

Die Oberseite der Hutzen kann vorteilhafterweise in Spannrichtung abgesenkt sein, wodurch sichergestellt werden kann, dass der Spanngurt und der Schlossgurt beim Einschieben der Zungen in die Halteorgane an das zugeordnete Element angedrückt werden, so dass sich jeweils eine satte Anlage von Spanngurt und Schlossgurt am zugeordneten Element ergibt.

Weitere vorteilhafte Ausgestaltungen und zweckmäßige Fortbildungen der übergeordneten Maßnahmen sind in den restlichen Unteransprüchen angegeben und aus den nachstehenden Beispielsbeschreibungen anhand der Zeichnung näher entnehmbar.

In der nachstehend beschriebenen Zeichnung zeigen:
- Figur 1: eine perspektivische Ansicht einer Spannvorrichtung;
- Figuren 2a bis 2c: jeweils perspektivische Ansichten der Einzelteile eines erfindungsgemäßen Spannschlossabschnittes;
- Figur 2d: eine perspektivische Ansicht eines Spannschlosses im an einem Element der Spannvorrichtung befestigten Zustand;
- Figuren 3a, 3b: jeweils perspektivische Ansichten der Einzelteile eines erfindungsgemäßen Spanngurtendabschnittes;
- Figur 3c: eine perspektivische Ansicht eines Spanngurtendabschnittes im an einem Element der Spannvorrichtung befestigten Zustand;
- Figuren 4a: die Montageschritte zum erfindungsgemäßen Befestigen des Spanngurts an einem
- bis 4c: zugeordneten Element; und
- Figuren 5a bis 5c: perspektivische Ansichten einer weiteren Spannvorrichtung.

Hauptanwendungsgebiet der Erfindung ist hauptsächlich der Abwasser- und Sanitärbereich bei der Verbindung von Rohren miteinander. Die Spannvorrichtung kann aber auch im Automobilbau oder im Maschinenbau eingesetzt werden. Sie ist jedoch hierauf nicht beschränkt.

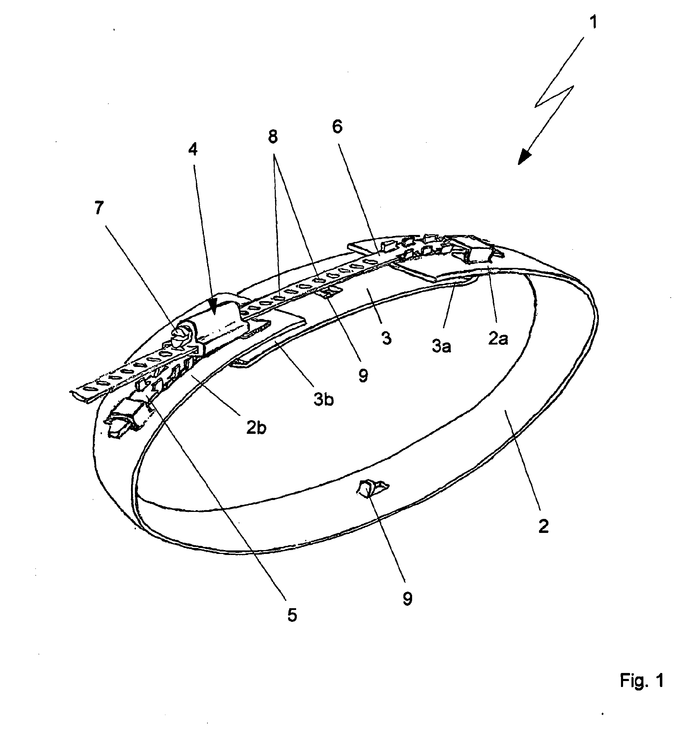

Der Aufbau einer Spannvorrichtung 1 wird gemäß Figur 1 anhand eines als Spannband ausgebildeten Elements 2 erläutert. Das Spannband 2 kann hierzu einteilig über den gesamten Umfang umlaufend ausgebildet sein. Es wird vorzugsweise aus Stahl oder Kunststoff hergestellt. Jedoch wird gemäß Figur 1 eine mehrteilige Ausbildung des Spannbandes 2 bevorzugt. Das hier dargestellte

Spannband 2 weist zusätzlich ein Einlageband 3 auf, welches in das Spannband 2 eingesetzt ist, so dass sich Enden 2a, 2b und 3a, 3b der beiden Bänder 2, 3 einander überlappen. Das Ende 2b des Spannbandes 2 ist dabei mit einem Spannschloss 4 in Verbindung mit einem als am Spannschloss 4 angreifender Gurtansatz ausgebildeter Schlossgurt 5 versehen, wobei das Ende 2a mit einem Spanngurt 6 versehen ist.

Das Spannschloss 4 ist als eine über einen Schraubenkopf 7 betätigbare Schneckenwelle ausgebildet, deren Zähne in im Spanngurt 6 vorgesehene Ausnehmungen 8 derart eingreifen, dass bei einer Drehung die Enden 2a und 2b des Spannbandes 2 gegeneinander gezogen oder voneinander gelöst werden, wenn die Spannvorrichtung 1 über einen dadurch zu befestigenden Gegenstand, wie beispielsweise einen zu befestigenden Schlauch oder aber auch eine Fixier- und/oder Dichtungsmanschette, angebracht oder entfernt wird.

Das Spannband 2 und das Einlageband 3 weisen jeweils ein angeformtes Positionierelement 9 auf, das als nach innen heraustretender bzw. umgebogener Vorsprung ausgebildet ist. Die beiden Positionierelemente 9 sind dabei so am Spannband 2 und am Einlageband 3 angeformt, dass sie sich annähernd gegenüberliegen. Diese vorzugsweise ausgestanzten Positionierelemente 9 sollen die Spannvorrichtung 1 beispielsweise auf einem Schlauch oder einer Fixier- und/ oder Dichtungsmanschette durch ihr Eingreifen in diese in Position halten, wobei die Positionierelemente 9 so am Spannband 2 und am Einlageband 3 angeformt sind, dass beim Anziehen des Spanngurts 6 zweckmäßig die kreisförmige Konfiguration des Spannbands 2, 3 beibehalten wird.

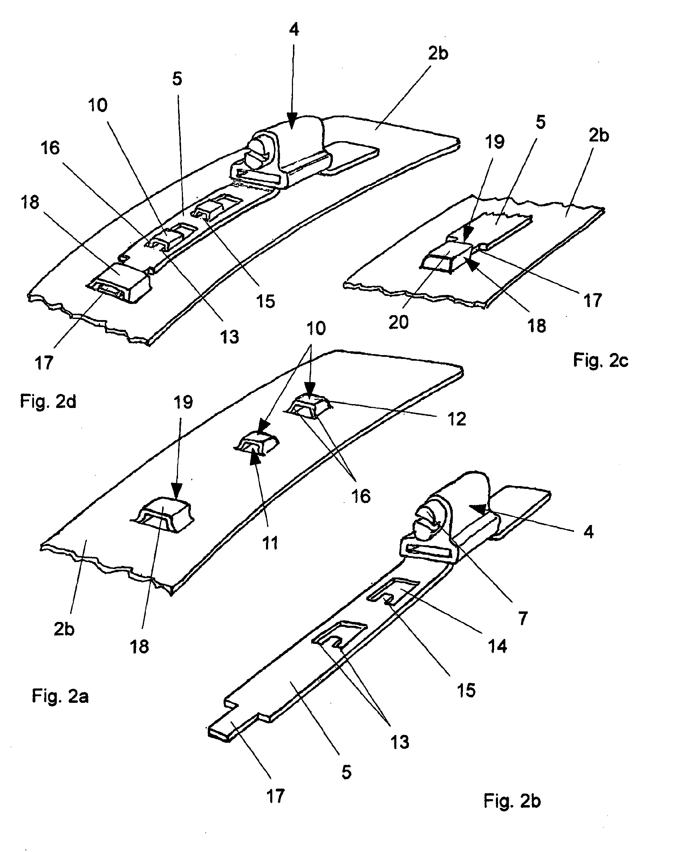

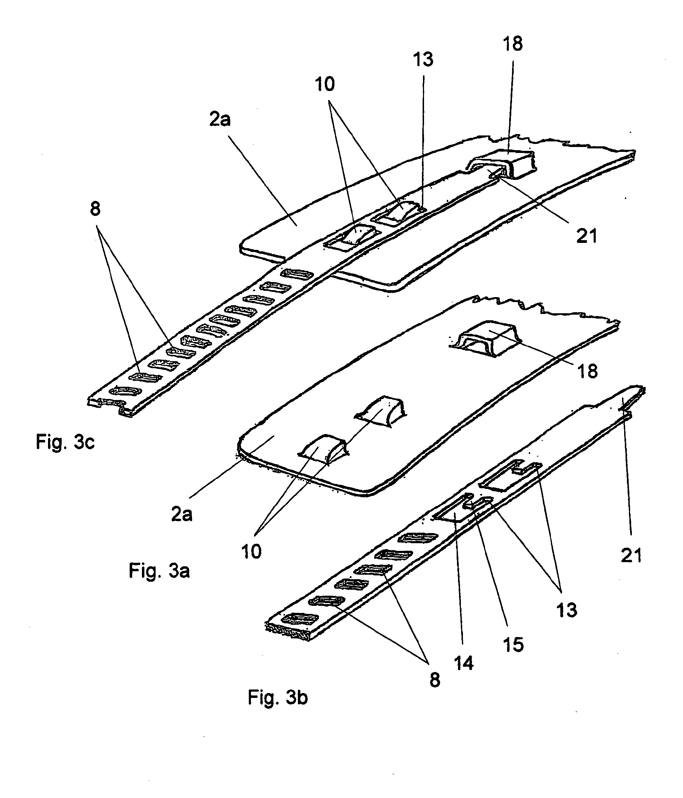

Die Figuren 2a bis 2d zeigen jeweils einzeln die Elemente Spannbandende 2b und Spannschloss 4 in Verbindung mit dem Schlossgurt 5 und die formschlüssige Verbindung dieser Elemente 2b, 4 und 5 miteinander. Wie aus Figur 2a ersichtlich, weist das Ende 2b des Spannbandes 2 als aus ihrer Ebene heraustretende Vorsprünge ausgebildete Halteorgane 10 auf. Die Halteorgane 10 sind an das Spannbandende 2b mittig angeformt und hier vorteilhaft als nach außen gedrückte Prägungen ausgeführte Hutzen ausgebildet. Die spannbandseitig vorgesehenen Hutzen 10 sind dabei als einseitig offene Taschen ausgebildet, deren Öffnungen 11 vom jeweils gegenüberliegenden Spannbandende 2a abgewandt sind. Ferner ist eine Oberseite 12 der Hutzen 10 in Spannrichtung abgesenkt, wie deutlicher in Figur 3a veranschaulicht ist.

Gemäß Figur 2b greift am Spannschloss 4 ein Schlossgurt 5 an. Der Schlossgurt 5 ist mit an den spannbandseitigen als Hutzen ausgebildeten Halteorganen 10 einhängbaren Gegenhalteorganen 13 versehen. Die Gegenhalteorgane 13 sind, wie erkennbar, mittig an den Schlossgurt 5 angeformt. Damit die Gegenhalteorgane 13 auch sicher in ihrer eingehängten Position an den Hutzen 10 gehalten werden, werden sie durch quer zur Spannrichtung verlaufende Anschlagkanten gebildet, die jeweils eine in die zugeordnete Hutze 10 des Spannbandendes 2b einführbare Zunge 15 flankieren. Zur Bildung der Gegenhalteorgane 13 und der Zungen 15 ist der Schlossgurt 5 mit U-förmigen Ausschnitten 14 versehen. Im eingehängten Zustand eines Gegenhalteorgans 13 an der zugeordneten Hutze 10 greift die Zunge 15 in den Innenraum der als Tasche ausgebildeten Hutze 10 ein, wobei die Anschlagkanten 13 an Seitenwände 16 der Hutze 10 als Begrenzung anliegen, wie in Figur 2d dargestellt ist.

Außerdem weist das vom Spannschloss 4 abgewandte Ende des Schlossgurts 5 eine Fixierzunge 17 auf, die mittig vom Schlossgurt 5 absteht. Der Fixierzunge 17 ist eine Fanghutze 18 des Spannbandendes 2b zugeordnet, wie aus Figur 2a und 2c ersichtlich ist, die eine dem Spannbandende 2a des Spannbandes 2 zugewandte Öffnung 19 aufweist. Für eine leichtere Erkennbarkeit der Fixierzunge 17 in der Fanghutze 18 ist die Fanghutze 18 in den Figuren 2a und 2d nach beiden Seiten offen dargestellt, nur in Figur 2c ist die Fanghutze 18 entsprechend mit nur einer Öffnung 19 gezeigt. Die Fanghutze 18 kann als einseitig offene Tasche mit einer entgegen der Spannrichtung abgesenkten Oberseite 20 ausgebildet sein, wie in Figur 2c erkennbar ist. Die Länge der Fixierzunge 17 des Schlossgurts 5 ist größer als die Länge der im Bereich der Gegenhalteorgane 13 vorgesehenen Zungen 15. Dabei entspricht der Längenüberschuss höchstens der lichten Innenlänge der als Halteorgane fungierenden Hutzen 10. Wie in den Figuren 2c und 2d gezeigt, greift die Fixierzunge 17 bei eingehängten Gegenhalteorganen 13 an den als Halteorgane fungierenden Hutzen 10 in die Fanghutze 18 ein. Dadurch liegt eine satte Anlage des Schlossgurts 5 an dem Spannband 2 vor. Zudem wird somit vorteilhaft das Abheben des Schlossgurts 5 vom Spannband 2 verhindert.

Die Figuren 3a bis 3c zeigen den Spanngurt 6 und das Spannbandende 2a einzeln und in Verbindung miteinander. Gleiche Bauteile gemäß den Figuren 2a bis 2d weisen auch hier gleiche Bezugszeichen auf. Das Spannbandende 2a weist ebenfalls die angeformten, als Vorsprünge ausgebildeten Halteorgane 10 in Form von Hutzen auf, wie das Spannbandende 2b. Die abgesenkte Oberseite der Hutze 10 ist in Figur 3a besonders gut erkennbar. Das Spannbandende 2a weist zudem auch eine Fanghutze 18 zur Aufnahme einer Fixierzunge 21 des Spanngurts 6 auf, die gemäß Figur 3b zu ihrem Ende hin leicht verjüngt ist. Sie kann jedoch auch wie die Fixierzunge 17 des Schlossgurtes 5 eine rechteckige Form aufweisen. Es soll allerdings auch nicht ausgeschlossen sein, dass die Fixierzunge 17 des Schlossgurtes 5 nicht auch zu ihrem Ende hin verjüngt sein kann. Der Spanngurt 6 ist gemäß Figur 3b ebenfalls mit Gegenhalteorganen 13 in Form von Anschlagkanten versehen, die jeweils eine in die zugeordnete Hutze 10 des Spannbandendes 2a einführbare Zunge 15 flankieren. Ferner weist der Spanngurt 6, wie bereits zu Figur 1 ausgeführt, die Ausnehmungen 8 auf, in die Zähne der Schneckenwelle des Spannschlosses 4 beim Anziehen des Spanngurts 6 eingreifen. In Figur 3c ist die formschlüssige Steckverbindung als solches dargestellt. Wie ersichtlich greifen auch hier die Zungen 15 in die Innenräume der als auf einer Seite offene Taschen ausgebildeten Hutzen 10 ein, so dass die als Gegenhalteorgane ausgebildeten Anschlagkanten 13 an den vorderen Seitenwandflächen 16 der Hutzen 10 anliegen bzw. das Einfahren der Zungen 15 in die Hutzen 10 mittels der Anschlagkanten 14 begrenzt wird. Die Gegenhalteorgane 13 sind somit an den als Halteorgane ausgebildeten Hutzen 10 eingehängt und gesichert. Gleichzeitig greift die Fixierzunge 21 in die Fanghutze 18 des Spannbandendes 2a ein. Ein Abheben des Endes des Spanngurts 6 wird dadurch vorteilhaft verhindert.

Wie die Figuren 2a bis 2d und 3a bis 3c in Verbindung mit der Figur 1 zeigen, sind die Hutzen 10 der einander gegenüberliegenden Enden 2a und 2b des Spannbands 2 bezüglich einer quer zur Spannrichtung verlaufenden Ebene spiegelbildlich ausgebildet.

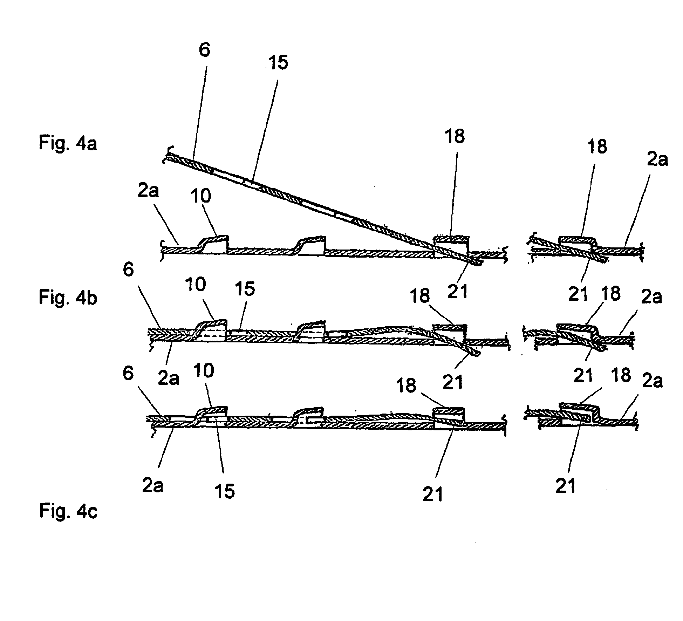

Die Figuren 4a bis 4c zeigen die Vorgehensweise bei der Anbringung des Spanngurts 6 an dem Spannbandende 2a. Die Anbringung des Schlossgurts 5 mit dem Spannschloss 4 an dem Spannbandende 2b erfolgt auf dieselbe Weise. Jeweils rechts neben den einzelnen Figuren 4a, 4b und 4c ist der Bereich der Fanghutze 18 detaillierter dargestellt. Wie die Figur 4a zeigt, wird zuerst die Fixierzunge 21 des Spanngurts 6 in die Fanghutze 18 derart eingeschoben, dass der vordere Bereich der Fixierzunge 21 unterhalb des Spannbandes 2 zu liegen kommt. Dann werden die einzelnen U-förmigen Ausschnitte 14 des Spanngurts 6 über die Hutzen 10 gelegt, wobei gleichzeitig das Ende der Fixierzunge 21 an die Unterseite des Spannbandes 2 gedrückt und im Bereich vor der Fanghutze 18 der Spanngurt 6 gewölbt wird, wie aus Figur 4b ersichtlich ist. Nachdem die Hutzen 10 des Spannbands 2 in den U-förmigen Ausschnitten 14 des Spanngurts 6 zu liegen kommen, werden die Zungen 15 durch die jeweilige Öffnung 11 in die als einseitig offene Taschen ausgebildeten Hutzen 10 des Spannbands 2 eingeführt, bis die als Anschlagkanten ausgebildeten Gegenhalteorgane 13 an den vorderen Seitenwandflächen 16 der Hutzen 10 anliegen, wie in Figur 4c erkennbar ist. Durch die abgesenkte Oberfläche der Hutzen 10 wird dabei sichergestellt, dass der Spanngurt 6 beim Einschieben der Zungen 15 in die Hutzen 10 an das Spannband 2 gedrückt wird. Der Spanngurt 6 liegt daraufhin direkt am Spannband 2 an. Durch das Eingreifen der Zungen 15 in die Hutzen 10 werden diese miteinander verhakt, so dass gewährleistet ist, dass der Spanngurt 6 sicher am Spannband 2 angebracht ist und sich nicht unerwünscht lösen kann. Gleichzeitig schnappt durch das Verschieben des Spanngurts 6 die Fixierzunge 21 von unten in die Fanghutze 18 ein, wodurch sich die Fixierzunge 21 in der Endstellung höhengleich zu dem vorderen Gurtbereich befindet. Ein Abheben des Spanngurts 6 von dem Spannband 2 kann dadurch verhindert werden. Auf diese Weise kann mit einfachen Bewegungen der Spanngurt 6 am Spannband 2 befestigt werden, ohne Zuhilfenahme von speziellen Montage-Werkzeugen. Außerdem kann die Spannvorrichtung 1 vorteilhaft vor Ort montiert werden, wodurch ein Vormontieren und darauffolgend ein spezieller Versand vermieden werden können.

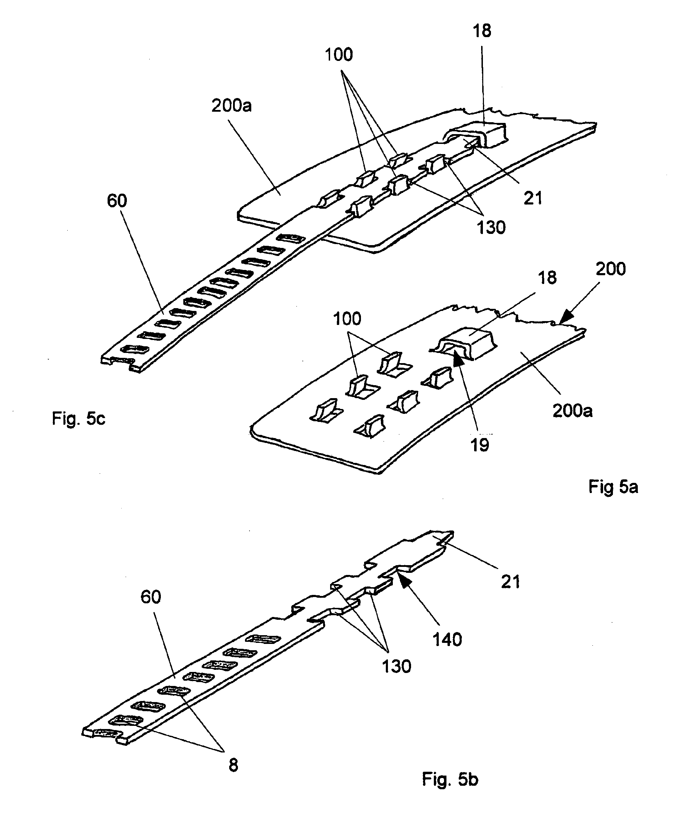

Die Figuren 5a bis 5c stellen eine weitere Ausführungsmöglichkeit der Halteorgane des Spannbands und der Gegenhalteorgane des Spanngurts dar. Der Schlossgurt und der Spanngurt können gleich ausgeführt sein. Gleiche Teile wie in den Figuren 2a bis 2d weisen auch hier gleiche Bezugszeichen auf. Die Figur 5a zeigt ein Ende 200a eines Spannbandes 200, bei dem Halteorgane 100 in Form von angeformten Haltenasen vorgesehen sind. Hierbei sind mehrere Haltenasen 100, bevorzugt sechs Haltenasen 100, am Spannbandende 200a angeformt, wobei zwei parallel zueinander angeordnete, jeweils drei Haltenasen 100 aufweisende Reihen vorgesehen sind. Eine Fanghutze 18 zur Aufnahme der Fixierzunge 21 eines in Figur 5b dargestellten Spanngurts 60 ist ebenfalls am Spannbandende 200a entsprechend angeformt. Der Spanngurt 60 weist neben den Ausnehmungen 8 Gegenhalteorgane 130 auf, die an den spannbandseitigen Haltenasen 100 zum Befestigen des Spanngurts 60 an dem Spannband 200 eingehängt werden. Die Gegenhalteorgane 130 werden durch Anschlagkanten von jeweils randseitig vorgesehenen, den Haltenasen 100 entsprechend ausgestaltete Aussparungen 140 gebildet. Die Anzahl der Aussparungen 140 entspricht dabei der Anzahl der Haltenasen 100 am Spannband 200.

Zum Befestigen des Spanngurts 60 am Spannbandende 200a wird die Fixierzunge 21 des Spanngurts 60 in die Fanghutze 18 des Spannbandendes 200a soweit eingeführt, bis die Aussparungen 140 gegenüber den Haltenasen 100 angeordnet sind. Dann wird der Spanngurt 60 abgelassen, so dass die Haltenasen 100 in die Aussparungen 140 eingreifen. Auch auf diese Weise kann eine formschlüssige Steckverbindung erreicht werden. Ein Abheben des Spanngurts 60 von dem Spannband 200 kann hier durch die in die Fanghutze 18 eingeführte Fixierzunge 21 verhindert werden.

Es ist selbstverständlich möglich, die beschriebenen Ausführungen der Halteorgane 10, 100 und der Gegenhalteorgane 13, 130 untereinander zu kombinieren. Auch können auf dem Spannband 2, 200 mehrere parallele Spanngurte 6, 60 vorgesehen sein, die in entsprechend zugeordnete mit Schlossgurte 5 versehene Spannschlösser 4 eingreifen.

Das Spannband 6, 60 kann dabei vorzugsweise einer als ringförmig umlaufender Federkorb ausgebildeten Fixiermanschette zur Fixierung von zwei aneinander anschließbaren Rohren ausgebildet sein.

Die Erfindung soll nicht auf die dargestellten Ausführungen der Spannvorrichtung 1 beschränkt sein, sondern es können zahlreiche Änderungen und Modifikationen vorgenommen werden, wobei derartige Modifikationen, die im Schutzbereich der anliegenden Ansprüche liegen, mit abgedeckt sein sollen.

## Patentansprüche

1. Spannvorrichtung zum Überbrücken von zwei aneinander annäherbaren Elementen (2a,2b,200a) mit wenigstens einem mit einem Element (2a,200a) verbundenen Spanngurt (6,60), der in ein zugeordnetes, mit dem anderen Element (2b) verbundenes Spannschloss (4) eingreift und hiermit bewegbar ist, wobei der Spanngurt (6,60) und das Spannschloss (4) jeweils durch eine formschlüssige Steckverbindung am zugeordneten Element (2a,2b,200a) angebracht ist, wobei die aneinander annäherbaren Elemente (2a,2b,200a) mit angeformten, als aus ihrer Ebene heraustretende Vorsprünge ausgebildeten Halteorganen (10,100) versehen sind und wobei der vom Spannschloss (4) abgewandte Endbereich des Spanngurts (6,60) und ein hierzu gegenläufiger, als am Spannschloss (4) angreifender Gurtansatz ausgebildeter Schlossgurt (5) mit an den elementseitigen Halteorganen (10,100) eingehängten Gegenhalteorganen (13,130) versehen sind, **dadurch gekennzeichnet, dass** die vom Spannschloss (4) abgewandten Enden des Spanngurts (6,60) und des Schlossgurts (5) mit jeweils einer Fixierzunge (17,21) versehen sind, der jeweils eine Fanghutze (18) des zugeordneten Elements (2a,2b,200a) zugeordnet ist, die eine dem jeweils gegenüberliegenden Element (2a,2b,200a) zugewandte Öffnung (19) aufweist, wobei die Länge der Fixierzunge (17,21) größer als die Länge von im Bereich der Gegenhalteorgane (13) vorgesehenen Zungen ist und wobei der Längenüberschuss höchstens der lichten Innenlänge der als Halteorgane (10) fungierenden Hutzen entspricht
und dass die Fixierzunge (17,21) bei in die als Halteorgane (10) fungierenden Hutzen eingefahrenen, den Gegenhalteorganen (13) zugeordneten Zungen (15) in die jeweils zugeordnete Fanghutze (18) einschnappt.

2. Vorrichtung nach Anspruch 1, **dadurch gekennzeichnet, dass** die Halteorgane (10,100) an die aneinander annäherbaren Elemente (2a,2b,200a) und die Gegenhalteorgane (13,130) an den Spanngurt (6,60) und an den Schlossgurt (5) angeformt sind.

3. Vorrichtung nach einem der vorhergehenden Ansprüche, **dadurch gekennzeichnet, dass** die Halteorgane (10) als angeformte Hutzen ausgebildet sind.

4. Vorrichtung nach einem der vorhergehenden Ansprüche, **dadurch gekennzeichnet, dass** die Gegenhalteorgane (13) durch quer zur Spannrichtung verlaufende Anschlagkanten gebildet werden, die jeweils eine in eine zugeordnete Hutze (10) einführbare Zunge (15) flankieren.

5. Vorrichtung nach einem der vorhergehenden Ansprüche, **dadurch gekennzeichnet, dass** der Spanngurt (6) und Schlossgurt (5) zur Bildung der Gegenhalteorgane (13) mit Zungen (15) und U-förmigen Ausschnitten (14) versehen sind.

6. Vorrichtung nach einem der vorhergehenden Ansprüche, **dadurch gekennzeichnet, dass** elementseitig vorgesehene Hutzen (10) als einseitig offene Taschen ausgebildet sind, deren Öffnung (11) vom jeweils gegenüberliegenden Element (2a,2b) abgewandt ist.

7. Vorrichtung nach Anspruch 6, **dadurch gekennzeichnet, dass** die Hutzen (10) der einander gegenüberliegenden Elemente (2a,2b) bezüglich einer quer zur Spannrichtung verlaufenden Ebene spiegelbildlich ausgebildet sind.

8. Vorrichtung nach einem der Ansprüche 6 oder 7, **dadurch gekennzeichnet, dass** die Oberseite (12) der Hutzen (10) in Spannrichtung abgesenkt ist.

9. Vorrichtung nach einem der vorhergehenden Ansprüche, **dadurch gekennzeichnet, dass** die aneinander annäherbaren Elemente (2a,2b,200a) durch die einander gegenüberliegenden Enden eines Spannbands (2,200) gebildet werden.

10. Vorrichtung nach einem der vorhergehenden Ansprüche, **dadurch gekennzeichnet, dass** mehrere parallele Spanngurte (6,60) vorgesehen sind.

11. Vorrichtung nach einem der vorhergehenden Ansprüche, **dadurch gekennzeichnet, dass** das Spannband (2,200) einer als ringförmig umlaufender Federkorb ausgebildeten Fixiermanschette zur Fixierung von zwei aneinander anschließbaren Rohren ausgebildet ist.

## Claims

1. A tensioning device for bridging two neighbouring elements (2a, 2b, 200a) comprising at least one tension belt (6, 60) connected with an element (2a, 200a), which tension belt engages an associated tension lock (4) connected with the other element (2b) and is movable therewith, with the tension belt (6, 60) and the tension lock (4) each being mounted on the associated element (2a, 2b, 200a) by a positive engagement plug-type connection, with the neighbouring elements (2a, 2b, 200a) being provided with attached retaining elements (10, 100) designed as projections protruding from their plane, and with the end section of the tension belt (6, 60) away from the tension lock (4) and a lock belt (5) in opposite direction to the tension belt designed as a lock belt (5) designed as a tension appendage acting on the tension lock (4) being provided with counter retaining elements (13, 130) attached to the element-side retaining elements (10, 100), **characterised in that** the ends of the tension belt (6, 60) and the lock belt (5) away from the tension lock (4) are provided with a fixation tongue (17, 21) each of which being associated with a catching retaining element (18) of the associated element (2a, 2b, 200a), having an opening (19) adjacent to each of the mutually opposite element (2a, 2b, 200a), with the length of the fixation tongue (17, 21) being larger than the length of the tongues provided in the area of the counter retaining elements (13) and with the length excess maximally corresponding to the clear interior length of the hood-shaped elements acting as retaining elements (10), and further that the fixation tongue (17, 21), as the tongues (15) associated with the counter retaining elements (13) extend into the hood-shaped elements acting as retaining elements (10) snaps into each associated catch hood-shaped element (18).

2. A device in accordance with Claim 1, **characterised in that** the retaining elements (10, 100) are attached to the neighbouring elements (2a, 2b, 200a) and the counter retaining elements (13, 130) to the tension belt (6, 60) and the lock belt (5).

3. A device in accordance with any of the previous Claims, **characterised in that** the retaining elements (10) are designed as attached hood-shaped elements.

4. A device in accordance with any of the previous Claims, **characterised in that** the counter retaining elements (13) are formed by stop edges extending in transverse direction relative to direction of tension, each of them flanking a tongue (15) which is insertable into an associated hood-shaped element (10).

5. A device in accordance with any of the previous Claims, **characterised in that** the tension belt (6) and the lock belt (5) for the purpose of forming the counter retaining elements (13) are provided with tongues (15) and U-shaped sections (14).

6. A device in accordance with any of the previous Claims, **characterised in that** the element-side provided hood-shaped elements (10) are designed as pockets which are open on one side and whose opening (11) is away from each of the opposite elements (2a, 2b).

7. A device in accordance with Claim 6, **characterised in that** the hood-shaped elements (10) of the mutually opposite elements (2a, 2b) relative to a plane extending in transverse direction to the direction of tension are designed in a mirror-inverted manner.

8. A device in accordance with any of the Claims 6 or 7, **characterised in that** the upper side (12) of the hood-shaped elements (10) is lowered in the direction of tension.

9. A device in accordance with any of the previous Claims, **characterised in that** the neighbouring elements (2a, 2b, 200a) are formed by the mutually opposite ends of a tension strap (2, 200).

10. A device in accordance with any of the previous Claims, **characterised in that** provision is made for several parallel tension belts (6, 60).

11. A device in accordance with any of the previous Claims, **characterised in that** the tensioning strap (2, 200) of a fixation sleeve designed as an annular spring bush is designed for the purpose of fixing two tubes which are connectable with each other.

## Revendications

1. Dispositif de serrage destiné à ponter deux éléments (2a, 2b, 200a) aptes à être rapprochés les uns des autres, comprenant au moins une sangle de serrage (6, 60) qui est reliée à un élément (2a, 200a) et qui s'engage dans un tendeur (4) associé relié à l'autre élément (2b) et est déplaçable par celui-ci, ladite sangle de serrage (6, 60) et ledit tendeur (4) étant montés chacun sur l'élément associé (2a, 2b, 200a) par une liaison à emboîtement à engagement positif, les éléments (2a, 2b, 200a) aptes à être rapprochés les uns des autres étant munis d'organes de maintien (10, 100) surmoulés réalisés en tant que projections faisant saillie de leur plan, et la zone terminale de la sangle de serrage (6, 60), qui est opposée au tendeur (4), ainsi qu'une sangle de tendeur (5) opposée à celle-ci et réalisée en tant que bout de sangle se prenant sur le tendeur (4) étant pourvues de contre-organes de maintien (13, 130) accrochés sur lesdits organes de maintien (10, 100) côté élément,
**caractérisé par le fait que** les extrémités de la sangle de serrage (6, 60) et de la sangle de tendeur (5) qui sont opposées au tendeur (4) sont pourvues d'une languette de fixation (17, 21) respectivement à laquelle est associé respectivement un capot d'arrêt (18) de l'élément associé (2a, 2b, 200a), qui présente une ouverture (19) montrant en direction de l'élément (2a, 2b, 200a) respectivement en regard, la longueur de la languette de fixation (17, 21) étant supérieure à la longueur de languettes prévues au niveau des contre-organes de maintien (13), et l'excédent de longueur correspondant tout au plus à la longueur intérieure libre des capots faisant fonction d'organes de maintien (10),
et que la languette de fixation (17, 21), lorsque les languettes (15) associées aux contre-organes de maintien (13) sont engagées dans les capots faisant fonction d'organes de maintien (10), s'enclenche dans le capot d'arrêt (18) respectivement associé.

2. Dispositif selon la revendication 1, **caractérisé par le fait que** les organes de maintien (10, 100) sont surmoulés sur les éléments (2a, 2b, 200a) aptes à être rapprochés les uns des autres et les contre-organes de maintien (13, 130) sont surmoulés sur la sangle de serrage (6, 60) et sur la sangle de tendeur (5).

3. Dispositif selon l'une quelconque des revendications précédentes, **caractérisé par le fait que** les organes de maintien (10) sont réalisés en tant que capots surmoulés.

4. Dispositif selon l'une quelconque des revendications précédentes, **caractérisé par le fait que** les contre-organes de maintien (13) sont formés par des bords de butée qui s'étendent transversalement à la direction de serrage et qui flanquent chacun une languette (15) apte à être introduite dans un capot associé (10).

5. Dispositif selon l'une quelconque des revendications précédentes, **caractérisé par le fait que**, pour former les contre-organes de maintien (13), lesdites sangles de serrage (6) et de tendeur (5) sont munies de languettes (15) et de découpes en U (14).

6. Dispositif selon l'une quelconque des revendications précédentes, **caractérisé par le fait que** des capots (10) prévus du côté de l'élément sont réalisés en tant que poches ouvertes sur un côté dont l'ouverture (11) montre dans la direction opposée à l'élément (2a, 2b) respectivement en regard.

7. Dispositif selon la revendication 6, **caractérisé par le fait que** les capots (10) des éléments (2a, 2b) situés en regard l'un de l'autre sont réalisés de manière réfléchie par rapport à un plan s'étendant transversalement à la direction de serrage.

8. Dispositif selon l'une quelconque des revendications 6 ou 7, **caractérisé par le fait que** la face supérieure (12) des capots (10) est abaissée dans la direction de serrage.

9. Dispositif selon l'une quelconque des revendications précédentes, **caractérisé par le fait que** les éléments (2a, 2b, 200a) aptes à être rapprochés les uns des autres sont formés par les extrémités d'une bande de serrage (2, 200) situées en regard l'une de l'autre.

10. Dispositif selon l'une quelconque des revendications précédentes, **caractérisé par le fait que** plusieurs sangles de serrage (6, 60) parallèles sont prévues.

11. Dispositif selon l'une quelconque des revendications précédentes, **caractérisé par le fait que** ladite bande de serrage (2, 200) d'un manchon de fixation réalisé comme panier élastique s'étendant tout autour en anneau est réalisée pour la fixation de deux tuyaux aptes à être raccordés l'un à l'autre.
